# FASCICULE DE BREVET EUROPEEN

(11) **EP 3 253 984 B1**
(45) Date de publication et mention de la délivrance du brevet: **26.01.2022**
(21) Numéro de dépôt: 16702963.6
(22) Date de dépôt: 05.02.2016
(51) Int. Cl.: F16D 55/227, F16D 65/097, F16D 65/40

(54) **FREIN À DISQUE COMPORTANT AU MOINS UN RESSORT DE RAPPEL ÉLASTIQUE D'UN PATIN DE FREINAGE, RESSORT DE RAPPEL ÉLASTIQUE, ET KIT DE REMPLACEMENT**
SCHEIBENBREMSE MIT MINDESTENS EINER FEDER FÜR DIE ELASTISCHE RÜCKSTELLUNG EINES BREMSBELAGS, ELASTISCHE RÜCKSTELLFEDER UND ERSATZKIT
DISK BRAKE COMPRISING AT LEAST ONE SPRING FOR THE ELASTIC RETURN OF A BRAKE PAD, ELASTIC RETURN SPRING, AND REPLACEMENT KIT

(30) Priorité: 06.02.2015 FR 1550928; 25.02.2015 FR 1551607
(43) Date de publication de la demande: 13.12.2017
(73) Titulaire: Hitachi Astemo France, 93700 Drancy (FR)
(72) Inventeur: FOUCOIN, Alexandre, 11600 Villegailhenc (FR); MONTEGU, Didier, 94420 Le Plessis Trevise (FR); LABARRE, Xavier, 49250 Saint Georges du Bois (FR)
(74) Mandataire: Brevalex
(86) Numéro de dépôt international: PCT/EP2016/052469
(87) Numéro de publication internationale: WO 2016/124728

(56) Documents cités:
- EP-A1- 2 792 899
- JP-A- H06 109 041
- JP-A- 2012 063 014

## Description

### DOMAINE TECHNIQUE DE L'INVENTION

L'invention se rapporte à un frein à disque de véhicule automobile.

L'invention se rapporte notamment à frein à disque dont un ressort de rappel élastique d'un patin de freinage comporte des moyens de rattrapage du jeu d'usure d'une garniture de friction du patin de freinage.

### ARRIERE PLAN TECHNIQUE DE L'INVENTION

L'invention se rapporte par exemple à un frein à disque de véhicule automobile du type décrit et représenté dans la demande de brevet français FR-A1-3.004.500 qui comporte :
- un disque de frein qui s'étend dans un plan transversal à un axe d'orientation axiale de rotation du disque ;
- un support fixe par rapport à un châssis du véhicule ;
- au moins un patin de freinage dont chacun comporte une garniture de friction dont une face transversale de friction coopère avec une piste de freinage associée du disque, le patin de freinage étant monté coulissant axialement dans le support entre une position avant active dans laquelle ladite face de friction est en appui contre la piste annulaire associée du disque, et une position arrière inactive dans laquelle ladite face de friction est espacée axialement de ladite piste annulaire associée du disque, d'un jeu déterminé de fonctionnement ;
- au moins un ressort de rappel élastique du patin de freinage vers sa position inactive, qui est par exemple interposé entre le patin de freinage et le support.

Dans un frein à disque, le coulissement des patins de freinage vers leur position active est commandé par un piston. Les deux patins de freinage pincent alors fortement le disque pour ralentir sa rotation. L'opération de freinage est ainsi une opération active.

Les patins de freinage sont repoussés vers leur position inactive par le disque en rotation. Il s'agit donc d'une opération passive.

Il arrive cependant que le disque ne repousse pas les patins de freinage avec suffisamment de force pour les écarter à distance suffisante du disque. Ceci peut par exemple se produire lorsque le coulissement des patins de freinage est de qualité insuffisante, voire grippé, ou bien si la conception crée de la « restitution ».

Bien que les patins de freinage ne soient plus serrés activement contre le disque, chacune des pistes annulaires de ce dernier frotte néanmoins en permanence contre la garniture de friction portée par le patin de freinage associé. Les garnitures de friction subissent ainsi une usure non fonctionnelle prématurée.

De plus, ce frottement permanent est susceptible de provoquer un échauffement dommageable pour certains organes du frein à disque.

Ce frottement permanent provoque aussi l'apparition d'un couple résiduel qui s'oppose à la rotation du disque. Ceci augmente la consommation du véhicule, tout en diminuant les performances du véhicule.

Pour résoudre ces problèmes d'usure et d'échauffement, le document mentionné précédemment propose un frein à disque dans lequel le ressort de rappel élastique comporte des moyens de rattrapage d'un jeu d'usure de la garniture de friction du patin de freinage qui se déforment plastiquement lorsque la course du patin de freinage jusqu'à sa position active est supérieure audit jeu déterminé de fonctionnement.

A cet effet, le ressort de rappel élastique, qui est interposé entre le support fixe du frein à disque et un patin de freinage associé, comporte au moins un tronçon d'orientation axiale qui est déformable élastiquement par traction entre un état de repos et un état d'élongation maximale dont la valeur est égale au jeu déterminé de fonctionnement, le ressort comportant au moins un tronçon déformable plastiquement, sous l'effet d'un effort de traction axiale, formant lesdits moyens de rattrapage du jeu d'usure, ce tronçon déformable plastiquement étant conformé pour être allongé plastiquement lorsque la course du patin de freinage jusqu'à sa position active est supérieure au jeu déterminé de fonctionnement.

Dans ce document, le ressort de rappel élastique comporte une portion de fixation du ressort de rappel élastique sur le support fixe, et une branche de raccordement, rigide et d'orientation générale axiale dont le tronçon d'extrémité libre est conformé pour coopérer avec le patin de freinage associé. Selon une autre conception connue, le tronçon d'extrémité libre est fixé sur le patin de freinage.

Dans ce document, la portion de fixation du ressort de rappel élastique est en forme d'une épingle à cheveux avec une languette qui comporte un corps qui s'étend axialement et qui se prolonge par une patte d'expansion élastique qui est rabattue en arrière contre le corps, en formant un pli avant formant une charnière à l'extrémité avant de la languette.

La languette et la patte d'expansion sont reçues dans une encoche d'un logement du support fixe qui présente une section transversale complémentaire afin de permettre une immobilisation verticale de l'organe de rappel.

Une telle conception nécessite notamment une forme de l'encoche, difficile à usiner et nécessitant une opération de brochage, et aboutit à un montage complexe de la partie de fixation, notamment lorsque le logement comporte une glissière, car du fait de sa forme en épingle à cheveux, la portion de fixation chevauche un fond vertical de la glissière.

Le document JP2012063014 montre en ressort de rappel pour frein à disque destiné à réduire le frottement résiduel du patin de frein sur le disque.

### BREF RESUME DE L'INVENTION

Afin de remédier à cet inconvénient, l'invention propose un frein à disque d'après la revendication 1.

Selon d'autres caractéristiques du frein à disque :
- ladite coulisse présente, en section par un plan vertical et transversal orthogonal à l'axe de rotation du disque, une forme de "C" ouvert transversalement vers l'oreille latérale associée du patin de freinage ;
- la coulisse est délimitée transversalement par un fond vertical d'orientation axiale ;
- ladite encoche est formée dans ledit fond vertical ;
- ladite encoche est réalisée par usinage ;
- le frein à disque comporte une glissière qui épouse les parois de ladite coulisse et qui est fixée au support fixe ;
- la lame est agencée transversalement entre ledit fond vertical et un fond d'orientation verticale en vis-à-vis de ladite glissière ;
- ladite butée appartient à une patte de butée qui s'étend à partir d'un bord d'orientation axiale du ressort de rappel élastique ;
- ladite patte de stabilisation s'étend transversalement et horizontalement à partir d'un bord d'orientation axiale du ressort de rappel élastique ;
- ladite coulisse est délimitée verticalement par un fond horizontal d'orientation axiale ;
- ladite patte de stabilisation se prolonge par un bec d'orientation axiale et verticale dont un bord d'extrémité libre est reçu dans une rainure axiale qui est formée dans ledit fond horizontal de ladite coulisse ;
- ladite branche de raccordement est une branche rigide d'orientation axiale parallèle à la direction de coulissement du patin de freinage ;
- le ressort de rappel élastique comporte des moyens de rattrapage d'un jeu d'usure de la garniture de friction du patin de freinage, qui se déforment plastiquement lorsqu'une course du patin de freinage jusqu'à sa position active de freinage, est supérieure audit jeu déterminé de fonctionnement ;
- le ressort de rappel élastique est réalisé en une seule pièce par découpe et formage d'une feuille de matériau.

L'invention propose un ressort de rappel élastique axial d'un patin de freinage d'après la revendication 11.

Selon d'autres caractéristiques du ressort de rappel élastique :
- ladite butée appartient à une patte de butée qui s'étend à partir d'un bord d'orientation axiale du ressort de rappel élastique ;
- ladite branche de raccordement est une branche rigide d'orientation axiale parallèle à la direction de coulissement du patin de freinage ;
- le ressort comporte des moyens de rattrapage d'un jeu d'usure d'une garniture de friction du patin de freinage, qui sont interposés entre ladite portion de fixation et ladite branche de raccordement, et qui se déforment plastiquement lorsqu'une course du patin de freinage, selon une direction axiale de déplacement jusqu'à une position active de freinage, est supérieure à un jeu déterminé de fonctionnement ;
- le ressort est réalisé en une seule pièce par découpe et formage d'une feuille de matériau.

L'invention propose un kit de remplacement pour un frein à disque de véhicule automobile selon l'invention, caractérisé en ce qu'il comporte au moins un patin de freinage et deux ressorts de rappel élastique appariés audit patin de freinage dont chacun est réalisé selon l'invention.

Le kit de remplacement peut comporter de plus deux ressorts de montage du patin de freinage dans le frein à disque.

### BREVE DESCRIPTION DES FIGURES

D'autres caractéristiques et avantages de l'invention apparaîtront à la lecture de la description détaillée qui va suivre pour la compréhension de laquelle on se reportera aux dessins annexés dans lesquels :
- la figure 1 est une vue en perspective éclatée qui représente un frein à disque comportant un exemple de ressort de rappel élastique en une seule pièce selon l'état de la technique ;
- la figure 2 est une vue de face qui représente le support fixe du frein à disque de la figure 1 muni de coulisses pour recevoir des ressorts de rappel élastique d'un patin de freinage associé ;
- la figure 3A est une vue schématique en perspective qui illustre un exemple de réalisation dans lequel chaque oreille d'un patin de freinage est équipée d'un ressort « radial » ;
- la figure 3B est une vue de détail de la représentation à la figure 3A ;
- la figure 4 est une vue partielle en perspective illustrant l'assemblage d'un patin de freinage avec un ressort radial dans un bras d'une chape formant support fixe muni d'une glissière rapportée ;
- la figure 5 est une vue de détail en perspective qui représente un ressort de rappel élastique du patin de freinage en une seule pièce déformable plastiquement selon une alternative de conception ;
- la figure 6 est une vue en perspective illustrant un exemple d'un ressort de rappel élastique selon l'invention associé à une patte active fixée au patin de freinage, l'ensemble étant illustré monté sur le frein à disque et dans un état « neuf » du ressort de rappel élastique non déformé élastiquement ni plastiquement ;
- la figure 7 est une vue analogue à celle de la figure 6, selon un autre angle de perspective ;
- la figure 8 est une vue axiale en bout de l'ensemble illustré aux figures 6 et 7 ;
- la figure 9 est une vue en perspective, avec arrachement partiel, du ressort illustré aux figures 6 à 8 ;
- la figure 10 est une vue axiale en bout à grande échelle de la coulisse illustrée aux figures 6 et 7 ;
- la figure 11 est une vue axiale en bout à grande échelle analogue à celle de la figure 8 qui illustre le montage du ressort de rappel élastique de la figure 9.

### DESCRIPTION DETAILLEEE DES FIGURES

Dans la suite de la description, des éléments présentant une structure identique ou des fonctions analogues seront désignés par des mêmes références.

On adoptera à titre non limitatif et sans référence à la gravité terrestre, des orientations axiales, verticales et transversales en référence au trièdre "A,V,T" des figures.

L'orientation axiale "A" est dirigée d'arrière en avant, parallèlement à un axe "B" de rotation du disque 12.

On définit le plan horizontal comme étant un plan axial transversal.

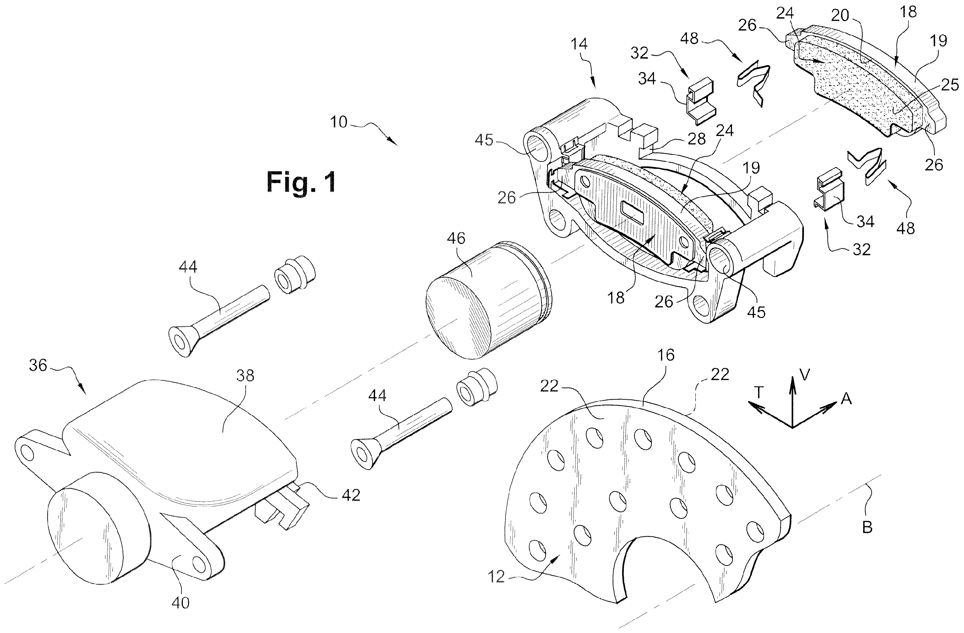

On a représenté schématiquement à la figure 1 un frein à disque 10 de véhicule automobile. Il s'agit ici d'un frein à disque 10 dit à "étrier flottant" ou « étrier coulissant ».

De manière connue, le frein à disque comporte un disque 12 qui est monté tournant autour d'un axe "B" de rotation d'orientation axiale. Le disque 12 est solidaire en rotation avec une roue (non représentée) du véhicule automobile.

Le frein à disque 10 comporte un support 14, aussi appelé chape, qui est monté fixe par rapport au châssis (non représenté) du véhicule. Le support fixe 14 chevauche un bord périphérique 16 du disque 12.

Deux patins de freinage opposés 18, arrière et avant (aussi appelés intérieur et extérieur) sont montés coulissant axialement dans le support fixe 14 de part et d'autre du disque 12.

Les deux patins de freinage 18, arrière et avant, présentent une structure et un agencement sur le support fixe 14 qui sont identiques par symétrie par rapport à un plan transversal vertical médian.

Par la suite, on ne décrira que le patin de freinage 18 arrière, à gauche en considérant la figure 1, la description étant applicable au patin de freinage 18 avant en inversant les directions avant et arrière.

Le patin de freinage arrière 18 se présente sous la forme d'une plaque transversale verticale 19 support de garniture de friction. Le patin de freinage arrière 18 présente une face avant 20, qui est orientée vers une face arrière 22 en vis à vis du disque 12 qui est en forme d'une piste annulaire. La face avant 20 porte une garniture de friction 24 dont une face transversale et verticale avant de friction 25 est apte à coopérer avec la face 22 du disque 12.

Chacune des extrémités transversales opposées du patin de freinage 18 comporte une oreille latérale 26 qui est montée coulissante, avec jeu, dans une coulisse 28 associée d'un bras associé 27 de la chape ou support fixe 14.

Chaque coulisse 28 est d'orientation axiale et présente, en section par un plan vertical et transversal orthogonal aux axes A et B, une forme de "C" ouvert transversalement vers l'oreille latérale associée 26 du patin de freinage 18. La coulisse 28 est délimitée transversalement par un fond 30 d'orientation axiale et globalement verticale. Outre le fond vertical 30, la coulisse est délimitée par un fond horizontal supérieur 33 et par un fond horizontal inférieur 35, tous deux d'orientation axiale.

Dans l'exemple représenté aux figures, une glissière 32 est interposée transversalement entre chaque oreille latérale 26 et la coulisse 28 associée.

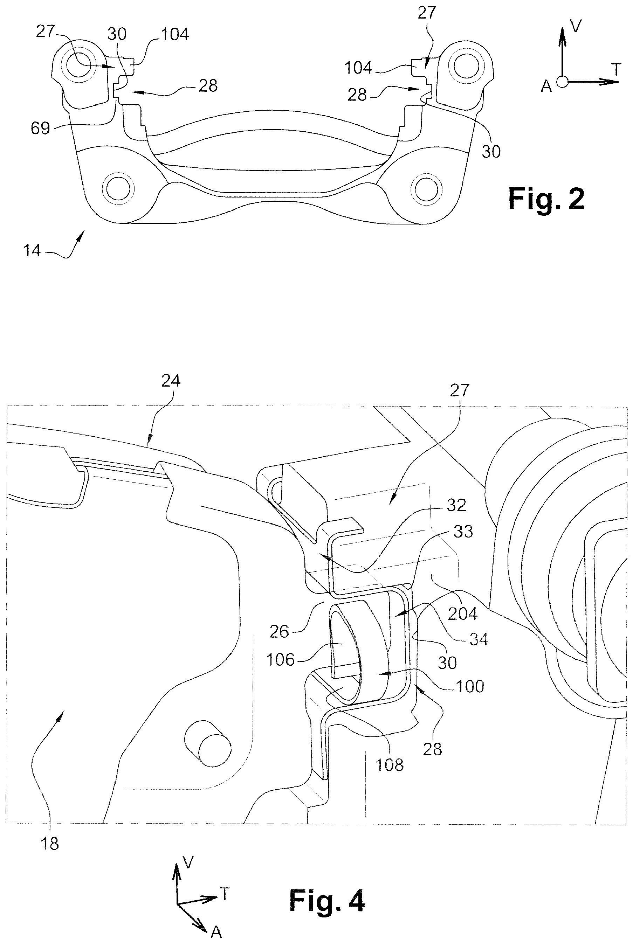

Chaque glissière 32 est un élément lamellaire formé par un ressort à lame de section en "C" qui épouse les parois de la coulisse 28 associée (voir notamment figure 4).

La glissière comporte une aile supérieure de glissement et d'appui, d'orientation générale horizontale, qui est interposée entre l'oreille 26 du patin de freinage 18 et le fond supérieur 33 du logement 28, un fond 34 d'orientation verticale, qui est interposée entre l'oreille 26 du patin de freinage et le fond vertical 30, et une aile élastique de maintien qui est agencée sous l'oreille 26 du patin de freinage 18.

La glissière 32 comporte ainsi un fond 34 d'orientation verticale et axiale qui est agencé en regard du fond vertical 30 de la coulisse 28.

La glissière 32 permet un degré déterminé de mouvement du patin de freinage 18 dans le support fixe 14, c'est-à-dire, généralement mais de manière non limitative, un mouvement de coulissement axial, et un mouvement de coulissement transversal accompagnant la rotation du disque 12, lors d'une action de freinage.

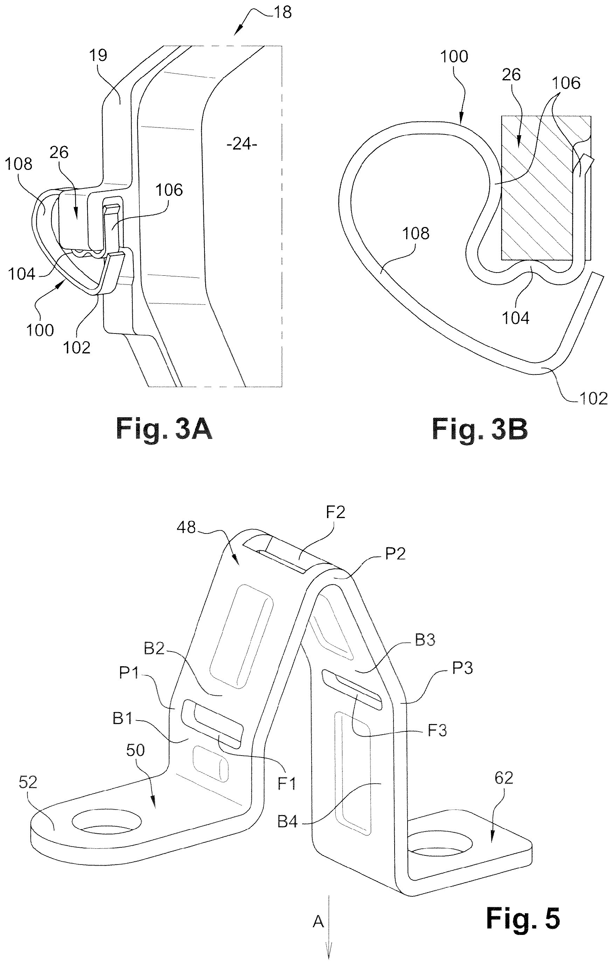

De manière non limitative, chaque oreille latérale 26 peut être équipée d'un ressort dit de montage, du type de celui décrit et représenté dans le document FR-A1-2.925.636 et dont un exemple est illustré en détail aux figures 3A, 3B et 4.

La figure 4 illustre l'assemblage d'un ressort de montage sur une oreille latérale 26 et le montage de l'oreille ainsi équipée dans une glissière associée 32.

On a représenté schématiquement, aux figures 3A, 3B et 4, un ressort 100 de montage du patin de freinage 18, aussi appelé ressort radial, susceptible d'équiper les oreilles 26 d'un patin de freinage 18 pour le montage et le guidage du patin de freinage 18 dans les coulisses axiales associées 28 du support fixe 14, avec, ou non, la présence de glissières 32.

De manière connue, chaque ressort 100 de patin comporte une branche inférieure 102 de glissement qui coopère avec un fond horizontal inférieur 35 de la coulisse associée et qui sollicite une facette horizontale supérieure de l'oreille 26 en appui verticalement vers le haut contre le fond horizontal 33 supérieur en vis-à-vis de la coulisse 28.

Selon la conformation illustrée, le ressort 100 de patin est communément appelé "ressort escargot" et il comporte une branche 104 prenant appui sous une facette inférieure horizontale de l'oreille 26 du patin de freinage 18, cette branche 104 faisant partie d'une branche de fixation, ou agrafe, 106 qui pince élastiquement l'oreille 26 pour assurer la fixation du ressort 100 de patin sur l'oreille 26.

Le ressort 100 de patin comporte encore une branche incurvée 108 qui relie la branche de fixation 106 à la branche inférieure 102 de glissement en assurant principalement l'élasticité du ressort de patin 100.

Le patin de freinage 18 est ainsi monté coulissant selon une direction axiale, parallèle à l'axe de rotation B du disque 12, dans le support fixe 14 sur une course de fonctionnement entre :
- une position avant active dans laquelle la face transversale avant de friction 25 de la garniture de friction 24 est en appui contre la face 22 en vis à vis du disque 12 ; et
- une position arrière inactive dans laquelle la face transversale avant de friction 25 de la garniture de friction 24 du patin de freinage 18 est écartée axialement par rapport à la face associée 22 du disque 12, d'un jeu déterminé de fonctionnement "J1".

Lors d'une opération de freinage, le serrage des patins de freinage 18, depuis leur position inactive jusqu'à leur position active, est commandé par un étrier de frein 36 du frein à disque 10.

De manière connue, l'étrier 36 comporte une voûte 38 qui s'étend axialement au-dessus du support fixe 14 en le recouvrant et deux ailes arrière 40 et avant 42 qui s'étendent radialement depuis des bords d'extrémité arrière et avant de la voûte 38 vers l'axe "B".

L'aile avant 42 s'étend en regard du patin de freinage 18 avant, et l'aile arrière 40 s'étend en regard du patin de freinage 18 arrière.

L'étrier 36 est ici monté coulissant axialement par rapport au support fixe 14 par l'intermédiaire de deux colonnettes parallèles 44 de guidage dont chacune est reçue en coulissement dans un alésage axial associé 45 du support fixe 14.

De manière connue, l'aile arrière 40 de l'étrier 36 porte au moins un piston 46 axial dont une face transversale avant d'appui est susceptible, lors d'une opération de freinage, de coopérer avec la face transversale en vis à vis du patin de freinage arrière 18 pour le solliciter axialement vers l'avant, pour exercer un effort axial de serrage de la face transversale avant de friction 25 de la garniture de friction 24 en appui contre la face 22 en vis à vis du disque 12.

Par réaction, l'étrier 36 coulisse axialement vers l'arrière et, de manière symétrique, l'aile avant 42 sollicite le patin de freinage 18 avant pour serrer la face transversale arrière de friction 25 de la garniture de friction 24 du patin de freinage 18 avant en appui contre la face 22 avant en vis à vis du disque 12.

Lorsque, à l'issue de l'opération de freinage, le piston 46 cesse de solliciter le patin de freinage 18 arrière, le retour des patins de freinage 18, depuis leur position active vers leur position inactive, est généralement provoqué par la rotation du disque 12 qui « repousse » chaque patin de freinage 18 vers sa position inactive.

Néanmoins, dans certains cas, on a constaté que la force de répulsion exercée par le disque 12 n'est pas suffisante pour repousser chacun des patins de freinage 18 jusqu'à sa position inactive respective. La garniture de friction 24 des patins de freinage 18 continue ainsi à frotter contre le disque 12, alors qu'aucune action de serrage des garnitures de friction des patins de freinage par l'étrier 36 n'est commandée.

A l'issue d'une opération de freinage, pour garantir que chaque patin de freinage 18 revient dans une position inactive, le frein à disque 10 est équipé de moyens de rappel élastique du patin de freinage 18 vers sa position inactive. Ces moyens de rappel élastique sont réalisés sous la forme de ressorts de rappel élastique qui sont interposés entre le patin de freinage 18 et le support fixe 14.

Le frein à disque 10 comporte à titre d'exemple non limitatif quatre ressorts de rappel élastique 48, aussi appelés ressorts « écarteurs », dont chacun - à titre non limitatif - est ici agencé entre un bras 27 du support fixe 14 et une oreille latérale associée 26 d'un patin de freinage 18.

Ainsi, un patin de freinage 18, arrière ou avant, est ici associé à deux ressorts de rappel élastique 48 dont chacun coopère avec la plaque 19 porte-garniture de friction.

A titre non limitatif, les quatre ressorts 48 de rappel élastique sont de même conception globale et ils sont agencés de la même manière sur le support fixe 14. Le principe de conception d'un seul de ces ressorts 48 de rappel élastique du patin de freinage arrière 18 sera donc décrit ici en détails.

Un ressort de rappel élastique 48 se présente sous la forme d'une bande métallique, par exemple en acier, de section rectangulaire dont la largeur s'étend verticalement et qui réalisée par exemple par découpe, emboutissage et pliage d'une tôle d'acier inoxydable d'épaisseur constante.

En se reportant notamment à la figure 5, un ressort de rappel élastique 48 comporte une première portion 50, dite de fixation, en forme générale d'une patte de fixation 52 du ressort 48 sur le support fixe 14, qui est reliée à l'extrémité d'une première branche rigide B1 et qui s'étend dans un plan orthogonal pour être fixée, par exemple par rivetage, sur une partie associée du support fixe 14.

A partir de la première branche rigide rectiligne d'orientation axiale B1, le ressort de rappel élastique 48 se prolonge successivement par trois autres branches rigides rectilignes B2, B3 et B4 respectivement.

La première branche B1 a son extrémité proximale reliée au coude 54, tandis que son extrémité distale est située axialement hors de la coulisse 28 pour être reliée à la deuxième branche rigide B2.

La deuxième branche rigide B2 est reliée à la première branche rigide B1 par un premier pli P1 déformable.

Comme la première branche B1, la deuxième branche rigide B2 est conformée en une bande dans le prolongement de la première branche rigide B1.

De façon à ce que le premier pli P1 en forme de coude constitue une zone déformable plastiquement, cette portion est affaiblie mécaniquement, ici au moyen d'une fenêtre ou lumière F1 qui est ici une découpe débouchante de forme rectangulaire.

De la même manière, la troisième branche rigide B3 est reliée à la deuxième branche rigide B2 par un deuxième pli déformable plastiquement P2.

Le deuxième pli P2 est une portion coudée de la bande de matériau comportant une fenêtre F2.

Enfin, la quatrième branche B4 est reliée à la troisième branche rigide B3 par un troisième pli déformable plastiquement P3.

Le troisième pli P3 comporte une fenêtre F3 analogue aux fenêtres F1 et F2.

La quatrième branche rigide B4 est rectiligne et d'orientation générale axiale parallèle à la première branche rigide B1 et elle se prolonge ici par un tronçon d'extrémité libre avant destiné à être relié directement au patin de freinage 18 associé.

Le tronçon d'extrémité libre avant est ici réalisé par prolongement de la bande constitutive des branches Bi.

Selon les conceptions illustrées à la figure 1 ou à la figure 5, le tronçon d'extrémité libre avant du ressort de rappel élastique 48 est conformé en une patte active 62 qui est coudée à angle droit pour agir directement sur une portion en vis-à-vis de la plaque porte-garniture de friction (figure 1) ou pour être fixée directement sur une partie associée du patin de freinage 18 (figure 5), et par exemple de sa plaque 19 porte-garniture de friction.

Aux figures, le ressort de rappel élastique 48 est représenté dans un état initial "neuf", c'est-à-dire avant toute déformation plastique des plis Pi.

Dans cet état, neuf ou initial, la première branche B1 et la quatrième branche rigide B4 sont sensiblement parallèles entre elles et d'orientation axiale en étant agencées à distance transversale l'une de l'autre.

Dans l'état - non représenté - de déformation plastique maximale du ressort de rappel élastique 48, les première et quatrième branches rigide B1 et B4 sont toujours sensiblement parallèles, d'orientation axiale et espacées l'une de l'autre sensiblement de la même distance, tandis que les trois plis Pi ont été déformés plastiquement.

A titre d'exemple, l'épaisseur de la bande de matériau est comprise entre 0,5 et 0,8 millimètre et le matériau est un acier inoxydable de référence X2CrNbCu21 ou de référence 304L (X2CrNi18-9 / X2CrNi19-11).

A titre d'exemple, le déplacement maximal correspondant à une usure maximale « J2 » est égal à environ 14 millimètres.

Lorsque le patin de freinage 18 est sollicité vers sa position active par le piston 46, il parcourt tout d'abord le trajet correspondant au jeu "J1" déterminé de fonctionnement.

Lors de cette première partie de la course, le patin de freinage 18 entraîne la branche B4 du ressort de rappel élastique 48 de manière à tendre élastiquement le ressort de rappel élastique 48 entre la portion de fixation 50 fixée au support fixe 14, et la branche B4 reliée au patin de freinage 18.

Les parties déformables élastiquement du ressort de rappel élastique 48 atteignent alors leur état d'élongation maximale.

Les plis Pi se déforment, d'abord élastiquement, puis plastiquement.

La face transversale avant de la garniture de friction 24 du patin de freinage 18 est encore écartée, par rapport à la face ou piste annulaire associée du disque 12, d'une distance égale au jeu "J2" d'usure. Le patin de freinage 18 poursuit sa course axiale jusqu'à sa position active.

Lors de cette deuxième partie de course, les parties déformables élastiquement ne pouvant plus se déformer « élastiquement », l'effort de serrage est transmis aux plis Pi déformables plastiquement du ressort de rappel élastique 48.

Les plis Pi sont alors déformés plastiquement, les déformations élastiques des parties déformables plastiquement étant négligeables par rapport à leur déformation plastique.

Lorsque l'opération de freinage prend fin, le patin de freinage 18 est rappelé vers sa position inactive par les parties déformables élastiquement qui reprennent leur état de repos.

Le patin de freinage 18 est ainsi à nouveau écarté du disque 12 d'une distance égale au seul jeu "J1" déterminé de fonctionnement ; le jeu "J2" d'usure ayant été absorbé par la déformation plastique des plis Pi déformables plastiquement.

Le ressort de rappel élastique 48 permet ainsi de garantir que le patin de freinage 18 est rappelé dans sa position inactive.

De plus, l'agencement de plis Pi déformables plastiquement permet d'éviter que l'effort de serrage à exercer par le piston 46 pour actionner le patin de freinage 18 vers sa position active ne devienne trop élevé.

En outre, en conservant un jeu "J1" de fonctionnement constant entre le patin de freinage 18 en position inactive et le disque 12, le temps de réponse du système de freinage demeure constant indépendamment de l'usure de la garniture de friction 24.

A usure complète maximale de la garniture de friction, le ressort de rappel élastique 48 est déformé plastiquement et, comme le patin de freinage usé 18, il doit être remplacé.

Selon les deux conceptions illustrées schématiquement aux figures 1 et 5, le ressort de rappel élastique comporte, de manière intégrée, la patte active 62 destinée à « agir » sur le patin de freinage 18, et notamment sur la plaque porte-garniture 19.

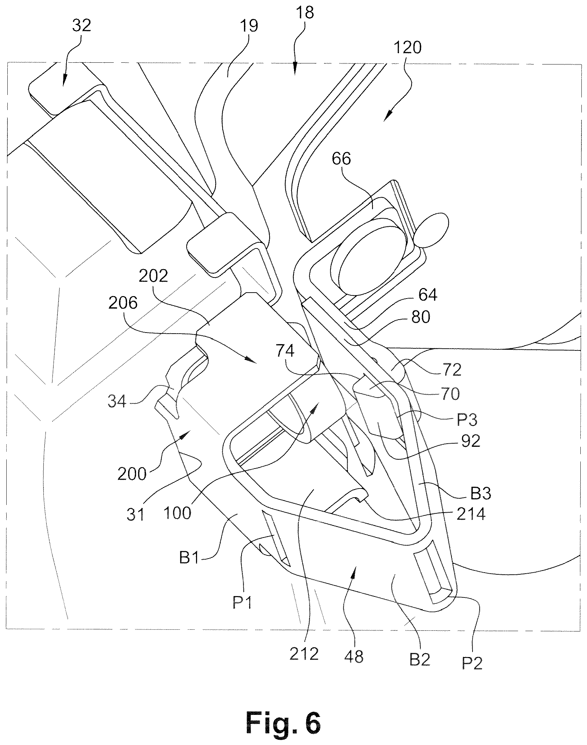

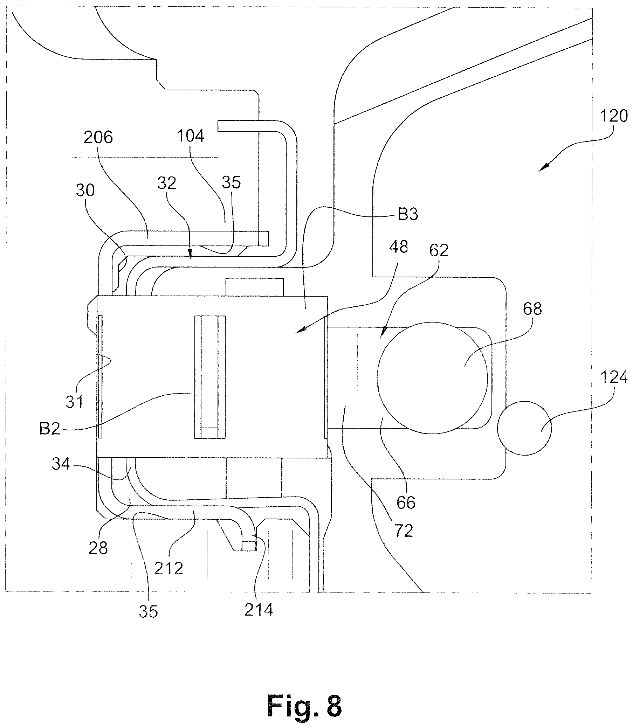

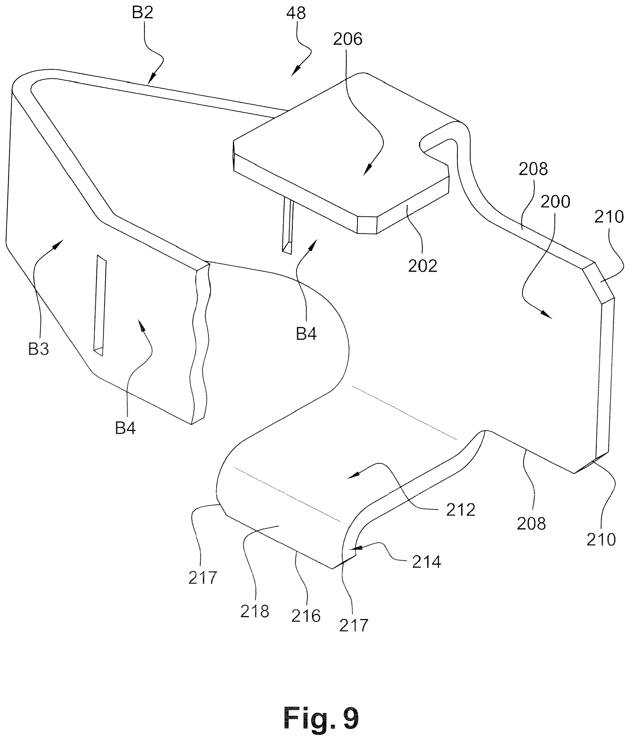

On décrira maintenant en référence aux figures 6 à 9 un exemple de conception selon laquelle la patte active 62 est un composant indépendant du ressort de rappel élastique 48 proprement dit et est fixée au patin de freinage 18 à partir duquel elle s'étend vers l'arrière selon la direction axiale, et selon laquelle un tronçon d'extrémité libre avant de la branche B4 de raccordement et un tronçon d'extrémité libre arrière de la patte active 62 comportent des moyens complémentaires de liaison par coopération de formes complémentaires.

La patte active 62 comporte un tronçon d'extrémité libre arrière 64 qui est une bande qui s'étend dans un plan axial vertical, et un tronçon 66 de fixation qui est replié à angle droit et qui s'étend dans un plan vertical et transversal.

Pour la fixation de la patte active 62, ici sur une portion en vis-à-vis de la plaque porte-garniture 19, le tronçon de fixation 66 est serti au moyen d'un rivet 68 dont la tige non représentée présente un profil non de révolution qui s'étend à travers d'un trou complémentaire non représenté du tronçon 66 de manière à positionner angulairement la patte active 62 par rapport au patin de freinage 18 avec l'orientation du tronçon 64 globalement dans un plan axial vertical.

Plus précisément, la plaque transversale porte-garniture 19 est munie d'une plaque intermédiaire 120.

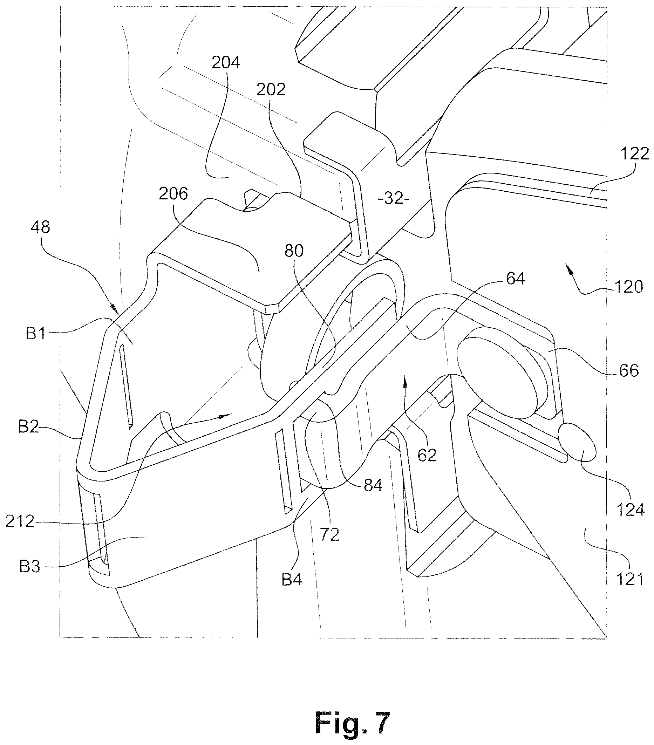

L'équipement de la plaque porte-garniture 19 avec une telle plaque intermédiaire fonctionnelle 120 est connu, et par exemple illustré à la figure 7 avec de plus une plaque en matériau élastomère 122.

Les fonctions et rôles de ce type de plaque intermédiaire sont bien connus de l'homme de l'art.

La plaque 120 est une plaque métallique, par exemple en acier inoxydable, ou en matériau rigide qui est interposée axialement entre la plaque support de garniture de friction 19 et un organe du frein à disque agissant sur le patin de freinage tel que par exemple le piston.

La plaque 120 est solidaire axialement du patin de freinage, par exemple au moyen de rivets 124.

La plaque intermédiaire 120 comporte une face 121 destinée à être en contact directement ou indirectement, avec le piston.

Le tronçon d'extrémité libre arrière 64 comporte un crochet 70 qui s'étend transversalement dans un plan orthogonal au plan de la bande constitutive du tronçon 64.

Le crochet 70 est formé à l'extrémité d'un doigt 72 qui délimite un bord libre avant d'orientation transversale « horizontale » 74.

On notera que chaque patte active 62 est de conception identique et présente une symétrie générale de conception par rapport à un plan axial et transversal médian.

La branche rigide B4 de « raccordement » du ressort de rappel élastique 48 à la patte active 62 portée par la garniture de friction 18 se prolonge par un tronçon d'extrémité libre avant 80 apte à coopérer avec le tronçon d'extrémité libre arrière 64 de la patte active 62.

Le tronçon 80 est qui est une bande qui s'étend dans un plan axial vertical et qui, en position montée et assemblée avec le tronçon 64, est en contact plan sur plan avec ce dernier, les deux tronçons étant maintenus l'un contre l'autre.

Le tronçon 80 comporte un cran 84 découpé dans le tronçon 80. Le cran 84 est en forme d'une fenêtre rectangulaire.

Le cran 84 est délimité axialement vers l'arrière par un bord arrière 88 qui, en position montée et assemblée des deux tronçons 64 et 80 est apte à coopérer avec le bord libre avant 74 du crochet 70, lors du rappel élastique du patin de freinage 18 vers l'arrière, vers sa position inactive.

Pour permettre l'assemblage par emboîtement axial par déformation élastique, la portion terminale est conformée en une rampe 96.

Lors de l'assemblage des deux composants, c'est-à-dire lorsque, par un mouvement axial relatif, le ressort de rappel élastique 48 est accouplé à la patte active 62 associée, les moyens complémentaires de liaison par coopération de formes complémentaires du tronçon d'extrémité libre avant de la branche de raccordement et du tronçon d'extrémité libre arrière de la patte active coopèrent par emboîtement élastique.

La rampe 92 écarte légèrement le doigt et le crochet 72 et 70, par déformation élastique jusqu'à pénétration et réception dans le cran 84.

On aboutit à l'état illustré à la figure 6 dans lequel :
- le tronçon d'extrémité libre avant 80 de la branche de raccordement B4 est une bande qui s'étend dans un plan axial vertical ;
- le tronçon d'extrémité libre arrière 64 de la patte active 62 est une bande qui s'étend dans un plan parallèle à celui du tronçon 80 ;
- les tronçons d'extrémité libre 64 et 80 sont adjacents, plan sur plan ;
- le doigt 72 d'orientation transversale orthogonale porté par le tronçon 64 est reçu dans un cran 84 formé dans le tronçon 80 ;
- un bord avant 74 du doigt coopère avec un bord arrière 88 du cran 84.

Pour son montage sur le bras 27 du support fixe 14, le ressort de rappel élastique 48 comporte une portion dite de « fixation » 50 qui est un prolongement en forme de lame 200 de la première branche B1.

La lame 200 est plane et rigide à bords horizontaux parallèles et elle est insérée et logée dans un usinage complémentaire 31 formé dans le fond vertical 30, pour assurer la plus grande stabilité à la partie de fixation et au ressort de rappel élastique 48.

A l'état neuf, tel qu'illustré aux figures, la lame 200 s'étend dans le prolongement et dans le même plan axial et vertical que celui de la première branche B1. La lame 200 constitue le tronçon d'extrémité libre de la branche B1.

La lame 200 de la portion 50 de fixation du ressort de rappel élastique 48 sur le support fixe 14 est fixée par insertion axiale dans la coulisse 28 associée, le long du fond vertical 30 qui est conformé en une encoche axiale 31 dimensionnée pour recevoir, pratiquement sans jeu, la lame 200.

La lame 200 est ainsi reçue et logée entre le fond vertical 30 et le fond 34 d'orientation verticale de la glissière associée 32 qui est interposée entre l'oreille 26 du patin de freinage et le fond 30.

Plus précisément l'encoche 31 est usinée par exemple par brochage axial ou par fraisage, et elle est délimitée par une face verticale 300, et par une face horizontale supérieure 302 ;

En position montée, la face externe plane 201 est en appui transversal contre la face verticale 300 et le bord horizontal supérieur 208 de la lame 200 est en appui vertical vers le haut contre la face horizontale supérieure 302, et ceci sensiblement sur toute la longueur axiale du bord 208.

La portion 50 de fixation du ressort de rappel élastique 48 sur le bras 27 comporte une butée 202 qui est en contact, en appui axial, avec une face en vis-à-vis 204 du bras 27 du support fixe 14 pour bloquer le coulissement axial du ressort de rappel élastique 48, axialement vers l'avant, dans le sens correspondant au déplacement axial du patin de freinage 18 vers sa position active de freinage.

La butée 202 appartient à une patte de butée 206 qui s'étend à partir du bord supérieur horizontal d'orientation axiale 208.

La butée 202 est ici un bord transversal d'extrémité libre avant de la patte de butée 206 qui s'étend dans un plan vertical et transversal orthogonal au plan de la lame 200.

La face 204 est avantageusement une face brute du bras du support fixe ne nécessitant pas d'usinage spécifique.

Ainsi, le ressort de rappel élastique 48 n'est pas à proprement parler fixé au bras 27, mais il est monté axialement sur ce dernier, par introduction axiale de la lame d'arrière en avant, avec positionnement axial par mise en appui de la butée 202 sur la surface 204.

La stabilité de la partie de fixation est encore complétée au moyen d'une patte de stabilisation 212 qui s'étend transversalement et horizontalement à partir du bord inférieur 208 de la lame 200. La patte de stabilisation se prolonge par un bec 214 d'orientation axiale et verticale dont le bord horizontal inférieur 216 est reçu dans une rainure axiale 304 de la coulisse 28.

La rainure axiale 304 est réalisée par usinage et par exemple par brochage axial ou par fraisage, dans le fond horizontal inférieur 35 de la coulisse 28.

On a représenté de manière hachurée la matière enlevée par usinage pour réaliser l'encoche 31 et la rainure 304 dans les fonds 30 et 35.

La rainure 304 s'étend axialement au moins en partie sur la longueur axiale du fond horizontal inférieur 35, sur une longueur suffisante pour permettre l'insertion axiale de la lame 200 jusqu'à la venue en butée axiale du ressort de rappel élastique 48.

La rainure axiale 304 est délimitée par une face horizontale inférieure de fond 306 et par une face verticale latérale 308, transversalement opposée à la face verticale 300 de l'encoche 31.

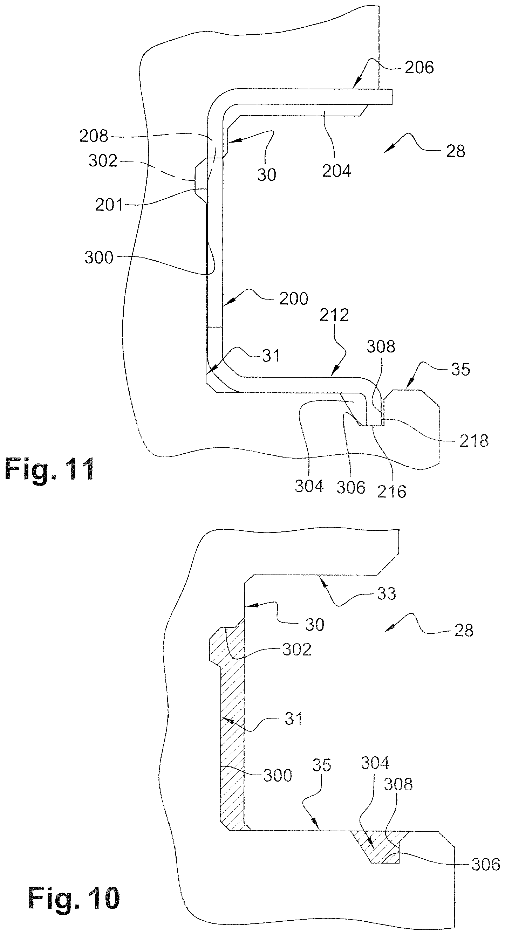

En position montée du ressort de rappel élastique 48, et comme on peut le voir notamment à la figure 11, le bord inférieur 216 est en appui vertical contre la face inférieure de fond 306 de la rainure 304, avec une légère précontrainte élastique due à la capacité de déformation élastique de la patte de stabilisation 212 lors du montage du ressort de rappel élastique 48.

Ainsi donc, les efforts de maintien du ressort de rappel élastique 48 sont verticalement vers le haut contre la face supérieure 302 et transversalement et horizontalement vers la gauche par coopération de la face 218 du bec 214 en appui contre la face verticale latérale 308 de la rainure 304.

L'ensemble des moyens qui viennent d'être décrits pour le positionnement axial du ressort de rappel élastique 48, son maintien latéral par rapport au support fixe et sa stabilisation prennent en compte les efforts axiaux de déplacement du patin de freinage, le moment de rotation ou de basculement du ressort autour d'un axe radial à son interface avec le support fixe, ainsi que l'effort de translation radial permettant le retour du patin de freinage.

Pour faciliter le montage par insertion axiale, le bord avant de la lame 200 comporte des chanfreins 210, de même que le bec 214 comporte des chanfreins 217.

Du fait de la conception de la partie de fixation 50, et notamment de la patte de butée 202, les deux ressorts 48 équipant un patin de freinage 18 ne sont pas identiques et interchangeables, mais ils constituent une paire de deux ressorts associés et appariés à un patin de freinage avant et/ou arrière, dont la conception est symétrique par rapport à un plan vertical et axial médian.

L'assemblage et le montage en usine s'effectue selon le procédé suivant :
a) montage des glissières opposées 32 ;
b) montage du patin de freinage 18 équipé de ses deux ressorts radiaux 100 ;
c) montage axial des deux ressorts 48 de rappel élastique dans les logements 28 ;
d) emboîtement axial et élastique des ressorts de rappel élastique 48, chacun avec sa patte active associée 62.

Un ensemble ou kit de remplacement d'un jeu usagé de patins de freinage 18 comporte, pour chaque patin de freinage, un patin de freinage 18 neuf proprement dit équipé d'une une paire de pattes actives associées, et au moins un jeu de deux ressorts de rappel élastique 48 constituant une paire de ressorts de rappel élastique appariés au patin de freinage associé.

Si le patin de freinage est du type équipé de ressorts de montage de patin 100, le kit de remplacement comporte, pour chaque patin de freinage, un patin neuf équipé de ses deux ressorts de patin 100, un pour chacune de ses deux oreilles radiales 26.

## Revendications

1. Frein à disque (10) de véhicule automobile qui comporte:
- un disque (12) de frein qui s'étend dans un plan transversal à un axe (A) d'orientation axiale de rotation du disque ;
- un support (14) fixe par rapport à un châssis du véhicule ;
- au moins un patin de freinage (18) qui comporte une plaque transversale verticale (19) qui porte une garniture de friction (24) dont une face transversale de friction (25) coopère avec une piste de freinage (22) associée du disque (12), le patin de freinage (18) étant monté coulissant axialement dans le support fixe (14) entre une position avant active dans laquelle ladite face (25) de friction est en appui contre la piste de freinage associée (22) du disque (12), et une position arrière inactive dans laquelle ladite face (25) de friction est espacée axialement de ladite piste de freinage associée du disque, d'un jeu (J1) déterminé de fonctionnement ;
- et au moins un ressort de rappel élastique (48) du patin de freinage (18) vers sa position inactive comportant au moins une portion de fixation (50) du ressort de rappel élastique (48) sur le support fixe (14) et comportant une branche (B4) de raccordement qui est reliée, directement ou indirectement, au patin de freinage (18),
et dans lequel ledit au moins un patin de freinage (18) comporte au moins une oreille (26) latérale de guidage en coulissement qui est reçue dans une coulisse (28) d'orientation axiale du support fixe (14) ;
la portion de fixation (50) du ressort de rappel élastique (48) sur le frein à disque (12) comportant une lame rigide (200) qui s'étend dans un plan parallèle à la direction axiale (A) de déplacement du patin de freinage (18), et qui est insérée axialement dans ladite coulisse (28) d'orientation axiale du support fixe (14), et
dans lequel la lame (200) est plane et rigide à bords parallèles et est insérée axialement et logée dans une encoche complémentaire (31) de ladite coulisse (28),
**caractérisé en ce que** la portion (50) de fixation du ressort de rappel élastique (48) sur le support fixe (14) comporte une butée (202) qui est en contact avec une face en vis-à-vis (204) du support fixe (14) pour bloquer le coulissement axial du ressort de rappel élastique (48) dans le sens correspondant au déplacement axial du patin de freinage (18) vers sa position active de freinage,
et **en ce que** la portion (50) de fixation du ressort de rappel élastique (48) sur le support fixe (14) comporte une patte de stabilisation (212) du ressort de rappel élastique (48) qui coopère avec une portion de ladite coulisse (28).

2. Frein à disque selon la revendication 1, **caractérisé en ce que** :
- ladite coulisse (28) présente, en section par un plan vertical et transversal orthogonal à l'axe de rotation du disque, une forme de "C" ouvert transversalement vers l'oreille latérale associée 26 du patin de freinage (18) ;
- la coulisse (28) est délimitée transversalement par un fond vertical (30) d'orientation axiale ;
- ladite encoche (31) est formée dans ledit fond vertical (30).

3. Frein à disque selon la revendication 2, **caractérisé en ce que** ladite encoche (31) est réalisée par usinage.

4. Frein à disque (10) selon la revendication 1, **caractérisé en ce que** :
- il comporte une glissière (32) qui épouse les parois de ladite coulisse (28) et qui est fixée au support fixe (14) ; et
- la lame (200) est agencée transversalement entre ledit fond vertical (30) et un fond (34) d'orientation verticale en vis-à-vis de ladite glissière (32).

5. Frein à disque selon la revendication 1, **caractérisé en ce que** ladite butée (202) appartient à une patte de butée (206) qui s'étend à partir d'un bord (208) d'orientation axiale du ressort de rappel élastique (48).

6. Frein à disque selon la revendication 1, **caractérisé en ce que** ladite patte de stabilisation (212) s'étend transversalement et horizontalement à partir d'un bord (208) d'orientation axiale du ressort de rappel élastique (48).

7. frein à disque selon la revendication 6, **caractérisé en ce que** :
- ladite coulisse (28) est délimitée verticalement par un fond horizontal (35) d'orientation axiale ; et
- ladite patte de stabilisation (212) se prolonge par un bec (217) d'orientation axiale et verticale dont un bord d'extrémité libre (218) est reçu dans une rainure axiale (216) qui est formée dans ledit fond horizontal de ladite coulisse (28).

8. Frein à disque selon la revendication 1, **caractérisé en ce que** ladite branche (B4) de raccordement est une branche rigide d'orientation axiale parallèle à la direction de coulissement du patin de freinage (18).

9. Frein à disque (10) selon la revendication 1, **caractérisé en ce que** le ressort de rappel élastique (48) comporte des moyens de rattrapage d'un jeu d'usure (J2) de la garniture de friction (24) du patin de freinage (18), qui se déforment plastiquement lorsqu'une course du patin de freinage jusqu'à sa position active de freinage, est supérieure audit jeu déterminé de fonctionnement (J1).

10. Frein à disque (10) selon la revendication 1, **caractérisé en ce que** le ressort de rappel élastique (48) est réalisé en une seule pièce par découpe et formage d'une feuille de matériau.

11. Ressort (48) de rappel élastique axial d'un patin de freinage (18), d'un frein à disque (12), vers une position inactive, dans lequel le ressort de rappel élastique (48) comporte :
- une portion de fixation (50) du ressort de rappel élastique (48) sur le frein à disque (14) ; et
- une branche (B4) de raccordement qui est reliée, directement ou indirectement, au patin de freinage (18);
la portion de fixation (50) du ressort de rappel élastique (48) sur le frein à disque (12) comportant une lame rigide (200) qui s'étend dans un plan parallèle à la direction axiale (A) de déplacement du patin de freinage (18), pour être insérée axialement dans une portion complémentaire (28, 31) du frein à disque,
dans lequel la portion (50) de fixation du ressort de rappel élastique (48) sur le support fixe (14) comporte une patte (212) de stabilisation du ressort de rappel élastique (48) qui coopère avec une portion de ladite coulisse (28),**caractérisé en ce que** la portion (50) de fixation du ressort de rappel élastique (48) sur le frein à disque (12) comporte une butée (202) pour coopérer avec une face (204) en vis-à-vis sur le frein à disque (12) pour bloquer le coulissement axial du ressort de rappel élastique (48) dans le sens correspondant au déplacement axial du patin de freinage (18) vers sa position active de freinage, et
**en ce que** ladite patte de stabilisation (212) s'étend transversalement et horizontalement à partir d'un bord (208) d'orientation axiale du ressort de rappel élastique (48).

12. Ressort selon la revendication 11, **caractérisé en ce que** ladite butée (202) appartient à une patte de butée (206) qui s'étend à partir d'un bord (208) d'orientation axiale du ressort de rappel élastique (48).

13. Ressort selon la revendication 11, **caractérisé en ce que** ladite branche (B4) de raccordement est une branche rigide d'orientation axiale parallèle à la direction de coulissement du patin de freinage (18).

14. Ressort selon la revendication 11, **caractérisé en ce qu'**il comporte des moyens de rattrapage d'un jeu d'usure (J2) d'une garniture de friction (24) du patin de freinage (18), qui sont interposés entre ladite portion de fixation et ladite branche de raccordement (B4), et qui se déforment plastiquement lorsqu'une course du patin de freinage (18), selon une direction axiale de déplacement jusqu'à une position active de freinage, est supérieure à un jeu déterminé de fonctionnement (J1).

15. Ressort selon la revendication 11, **caractérisé en ce qu'**il est réalisé en une seule pièce par découpe et formage d'une feuille de matériau.

16. Kit de remplacement pour un frein à disque de véhicule automobile selon l'une quelconque des revendications 1 à 10, **caractérisé en ce qu'**il comporte au moins un patin de freinage (18) et deux ressorts (48) de rappel élastique appariés audit patin de freinage (18) dont chacun est réalisé selon l'une quelconque des revendications 11 à 15.

17. Kit de remplacement selon la revendication 16, **caractérisé en ce qu'**il comporte de plus deux ressorts (100) de montage du patin de freinage dans le frein à disque.

## Patentansprüche

1. Scheibenbremse (10) für ein Automobilfahrzeug, umfassend:
- eine Bremsscheibe (12), die sich in einer Ebene transversal zu einer Drehachse (A) der Scheibe mit axialer Orientierung erstreckt;
- einen Träger (14), der bezüglich eines Fahrzeugrahmens fest ist;
- wenigstens einen Bremsklotz (18), der eine transversale vertikale Platte (19) umfasst, die einen Reibbelag (24) trägt, von dem eine transversale Reibfläche (25) mit einer zugeordneten Bremsbahn (22) der Scheibe (12) zusammenwirkt, wobei der Bremsklotz (18) in dem festen Träger (14) axial verschiebbar zwischen einer vorderen aktiven Position, in der die Reibfläche (25) in Anlage gegen die zugeordnete Bremsbahn (22) der Scheibe (12) ist, und einer hinteren inaktiven Position montiert ist, in der die Reibfläche (25) axial von der zugeordneten Bremsbahn der Scheibe um ein bestimmtes Funktionsspiel (J1) beabstandet ist;
- und wenigstens eine Feder (48) zur elastischen Rückstellung des Bremsklotzes (18) in Richtung seiner inaktiven Position, umfassend wenigstens einen Bereich (50) zur Befestigung der elastischen Rückstellfeder (48) an dem festen Träger (14) und umfassend einen Anschlussarm (B4), der direkt oder indirekt mit dem Bremsklotz (18) verbunden ist,
und wobei der wenigstens eine Bremsklotz (18) wenigstens ein laterales Gleitführungsohr (26) umfasst, das in einem Gleitführungselement (28) des festen Trägers (14) mit axialer Orientierung aufgenommen ist;
wobei der Bereich (50) zur Befestigung der elastischen Rückstellfeder (48) an der Scheibenbremse (12) eine starre Zunge (200) umfasst, die sich in einer Ebene parallel zur axialen Verlagerungsrichtung (A) des Bremsklotzes (18) erstreckt, und die axial in das Gleitführungselement (28) des festen Trägers (14) mit axialer Orientierung eingesetzt ist, und
wobei die Zunge (200) flach und starr mit parallelen Rändern ist, und sie axial in eine komplementäre Einkerbung (31) des Gleitführungselements (28) eingesetzt und darin aufgenommen ist,
**dadurch gekennzeichnet, dass** der Bereich (50) zur Befestigung der elastischen Rückstellfeder (48) an dem festen Träger (14) einen Anschlag (202) umfasst, der in Kontakt mit einer gegenüberliegenden Fläche (204) des festen Trägers (14) ist, um die Axialverschiebung der elastischen Rückstellfeder (48) in der Richtung entsprechend der Axialverlagerung des Bremsklotzes (18) in Richtung seiner aktiven Bremsposition zu blockieren,
und dass der Bereich (50) zur Befestigung der elastischen Rückstellfeder (48) am festen Träger (14) eine Klaue (212) zur Stabilisierung der elastischen Rückstellfeder (48) umfasst, die mit einem Bereich des Gleitführungselements (28) zusammenwirkt.

2. Scheibenbremse nach Anspruch 1, **dadurch gekennzeichnet, dass**:
- das Gleitführungselement (28) im Querschnitt entlang einer vertikalen und transversalen Ebene orthogonal zur Drehachse der Scheibe eine "C"-Form aufweist, die transversal in Richtung des zugeordneten lateralen Ohrs (26) des Bremsklotzes (18) geöffnet ist;
- das Gleitführungselement (28) transversal durch einen vertikalen Boden (30) mit axialer Orientierung begrenzt ist;
- die Einkerbung (31) in dem vertikalen Boden (30) gebildet ist.

3. Scheibenbremse nach Anspruch 2, **dadurch gekennzeichnet, dass** die Einkerbung (31) durch spanabhebende Verarbeitung realisiert ist.

4. Scheibenbremse (10) nach Anspruch 1, **dadurch gekennzeichnet, dass**:
- sie eine Gleitschiene (32) umfasst, die an die Wände des Gleitführungselements (28) angepasst ist, und die an dem festen Träger (14) befestigt ist; und
- die Zunge (200) transversal zwischen dem vertikalen Boden (30) und einem Boden (34) mit vertikaler Orientierung gegenüber der Gleitschiene (32) angeordnet ist.

5. Scheibenbremse nach Anspruch 1, **dadurch gekennzeichnet, dass** der Anschlag (202) zu einer Anschlagsklaue (206) gehört, die sich ausgehend von einem Rand (208) der elastischen Rückstellfeder (48) mit axialer Orientierung erstreckt.

6. Scheibenbremse nach Anspruch 1, **dadurch gekennzeichnet, dass** sich die Stabilisierungsklaue (212) transversal und horizontal ausgehend von einem Rand (208) der elastischen Rückstellfeder (48) mit axialer Orientierung erstreckt.

7. Scheibenbremse nach Anspruch 6, **dadurch gekennzeichnet, dass**:
- das Gleitführungselement (28) vertikal durch einen horizontalen Boden (35) mit axialer Orientierung begrenzt ist; und
- die Stabilisierungsklaue (212) durch einen Schnabel (217) mit axialer und vertikaler Orientierung verlängert ist, von dem ein freier Endrand (218) in einer axialen Rille (216) aufgenommen ist, die in dem horizontalen Boden des Gleitführungselements (28) gebildet ist.

8. Scheibenbremse nach Anspruch 1, **dadurch gekennzeichnet, dass** der Anschlussarm (B4) ein starrer Arm mit axialer Orientierung parallel zur Verschieberichtung des Bremsklotzes (18) ist.

9. Scheibenbremse (10) nach Anspruch 1, **dadurch gekennzeichnet, dass** die elastische Rückstellfeder (48) Mittel zur Kompensation eines Verschleißspiels (J2) des Reibbelags (24) des Bremsklotzes (18) umfasst, die sich plastisch verformen, wenn ein Weg des Bremsklotzes bis zu seiner aktiven Bremsposition größer ist als das bestimmte Funktionsspiel (J1).

10. Scheibenbremse (10) nach Anspruch 1, **dadurch gekennzeichnet, dass** die elastische Rückstellfeder (48) aus einem einzigen Stück durch Schneiden und Formen eines Materialblatts hergestellt ist.

11. Feder (48) zur elastischen axialen Rückstellung eines Bremsklotzes (18) einer Scheibenbremse (12) in Richtung einer inaktiven Position, wobei die elastische Rückstellfeder (48) umfasst:
- einen Bereich (50) zur Befestigung der elastischen Rückstellfeder (48) an der Scheibenbremse (14); und
- einen Anschlussarm (B4), der direkt oder indirekt mit dem Bremsklotz (18) verbunden ist;
wobei der Bereich (50) zur Befestigung der elastischen Rückstellfeder (48) an der Scheibenbremse (12) eine starre Zunge (200) umfasst, die sich in einer Ebene parallel zur axialen Verlagerungsrichtung (A) des Bremsklotzes (18) erstreckt, um axial in einem komplementären Bereich (28, 31) der Bremsscheibe eingesetzt zu sein,
wobei der Bereich (50) zur Befestigung der elastischen Rückstellfeder (48) an dem festen Träger (14) eine Klaue (212) zur Stabilisierung der elastischen Rückstellfeder (48) umfasst, die mit einem Bereich des Gleitführungselements (28) zusammenwirkt,
**dadurch gekennzeichnet, dass** der Bereich (50) zur Befestigung der elastischen Rückstellfeder (48) an der Scheibenbremse (12) einen Anschlag (202) zur Zusammenwirkung mit einer gegenüberliegenden Fläche (204) an der Scheibenbremse (12) umfasst, um die axiale Verschiebung der elastischen Rückstellfeder (48) in der Richtung entsprechend der Axialverlagerung des Bremsklotzes (18) in Richtung seiner aktiven Bremsposition zu blockieren, und
dass sich die Stabilisierungsklaue (212) transversal und horizontal ausgehend von einem Rand (208) der elastischen Rückstellfeder (48) mit axialer Orientierung erstreckt.

12. Feder nach Anspruch 11, **dadurch gekennzeichnet, dass** der Anschlag (202) zu einer Anschlagsklaue (206) gehört, die sich ausgehend von einem Rand (208) der elastischen Rückstellfeder (48) mit axialer Orientierung erstreckt.

13. Feder nach Anspruch 11, **dadurch gekennzeichnet, dass** der Anschlussarm (B4) ein starrer Arm mit axialer Orientierung parallel zur Verschieberichtung des Bremsklotzes (18) ist.

14. Feder nach Anspruch 11, **dadurch gekennzeichnet, dass** sie Mittel zur Kompensation eines Verschleißspiels (J2) eines Reibbelags (24) des Bremsklotzes (18) umfasst, die zwischen dem Befestigungsbereich und dem Anschlussarm (B4) eingefügt sind, und die sich plastisch verformen, wenn ein Weg des Bremsklotzes (18) entlang einer axialen Verlagerungsrichtung bis zu einer aktiven Bremsposition größer ist als ein bestimmtes Funktionsspiel (J1).

15. Feder nach Anspruch 11, **dadurch gekennzeichnet, dass** sie aus einem einzelnen Stück durch Schneiden und Formen eines Materialblatts hergestellt ist.

16. Ersatzteilsatz für eine Scheibenbremse für ein Automobilfahrzeug nach einem der Ansprüche 1 bis 10, **dadurch gekennzeichnet, dass** er wenigstens einen Bremsklotz (18) und zwei elastische Rückstellfedern (48) umfasst, die dem Bremsklotz (18) paarweise zugeordnet sind, von denen jede gemäß einem der Ansprüche 11 bis 15 realisiert ist.

17. Ersatzteilsatz nach Anspruch 16, **dadurch gekennzeichnet, dass** er ferner zwei Federn (100) zur Montage des Bremsklotzes in der Scheibenbremse umfasst.

## Claims

1. A disc brake (10) for an automotive vehicle which includes:
- a brake disc (12) which extends in a plane transverse to an axial orientation axis (A) of rotation of the disc;
- a fixed support (14) which is fixed with respect to a vehicle chassis;
- at least one brake pad (18) which includes a vertical transverse plate (19) which carries a friction lining (24) a friction transverse face (25) of which cooperates with an associated brake track (22) of the disc (12), the brake pad (18) being axially slidingly mounted in the fixed support (14) between an active front position in which said friction face (25) bears on the associated brake track (22) of the disc (12), and an inactive rear position in which said friction face (25) is axially spaced from said associated brake track of the disc, by a determined operating play (J1);
- and at least one elastic return spring (48) for the elastic return of the brake pad (18) to its inactive position including at least one attachment portion (50) for attaching the elastic return spring (48) on the fixed support (14) and including a connecting branch (B4) which is directly or indirectly connected to the brake pad (18),
and wherein said at least one brake pad (18) includes at least one slidably guiding side lug (26) which is received in an axial orientation slider (28) of the fixed support (14);
attachment portion (50) for attaching the elastic return spring (48) to the disc brake (12) including a rigid blade (200) which extends in a plane parallel to the axial displacement direction (A) of the brake pad (18), and which is axially inserted in said axial orientation slider (28) of the fixed support (14),
wherein the blade (200) is planar and rigid with parallel edges and is axially inserted and housed in a complementary notch (31) of said slider (28),
**characterised in that** the attachment portion (50) for attaching the elastic return spring (48) to the fixed support (14) includes a stop (202) which is in contact with a face (204) facing the fixed support (14) to block the axial sliding of the elastic return spring (48) in the direction corresponding to the axial displacement of the brake pad (18) to its active braking position,
and **in that** the attachment portion (50) for attaching the elastic return spring (48) to the fixed support (14) includes a stabilising leg (212) of the elastic return spring (48) which cooperates with a portion of said slider (28).

2. The disc brake according to claim 1, **characterised in that**:
- said slider (28) has, in a cross-section by a vertical transverse plane orthogonal to the axis of rotation of the disc, a "C" shape transversally open to the associated side lug (26) of the brake pad (18);
- the slider (28) is transversally delimited by an axial orientation vertical bottom (30);
- said notch (31) is formed in said vertical bottom (30).

3. The disc brake according to claim 2, **characterised in that** said notch (31) is made by machining.

4. The disc brake (10) according to claim 1, **characterised in that**:
- it includes a guide rail (32) which snugly fits into the walls of said slider (28) and which is attached to the fixed support (14); and
- the blade (200) is transversally arranged between said vertical bottom (30) and a vertical orientation bottom (34) facing said guide rail (32).

5. The disc brake according to claim 1, **characterised in that** said stop (202) belongs to a stop leg (206) which extends from an axial orientation edge (208) of the elastic return spring (48).

6. The disc brake according to claim 1, **characterised in that** said stabilising leg (212) transversally and horizontally extends from an axial orientation edge (208) of the elastic return spring (48).

7. The disc brake according to claim 6, **characterised in that**:
- said slider (28) is vertically delimited by an axial orientation horizontal bottom (35); and
- said stabilising leg (212) extends to an axial vertical orientation mouth (217) a free end edge (218) of which is received in an axial groove (216) which is formed in said horizontal bottom of said slider (28).

8. The disc brake according to claim 1, **characterised in that** said connecting branch (B4) is an axial orientation rigid branch parallel to the sliding direction of the brake pad (18).

9. The disc brake (10) according to claim 1, **characterised in that** the elastic return spring (48) includes means for compensating for a wear play (J2) of the friction lining (24) of the brake pad (18), which are plastically deformed when a stroke of the brake pad to its active braking position, is higher than said determined operating play (J1).

10. The disc brake (10) according to claim 1, **characterised in that** the elastic return spring (48) is made as a single piece by cutting and forming a material sheet.

11. A spring (48) for the axial elastic return of a brake pad (18), of a disc brake (12), to an inactive position, wherein the elastic return spring (48) includes:
- an attachment portion (50) for attaching the elastic return spring (48) to the disc brake (14); and
- a connecting branch (B4) which is directly or indirectly connected to the brake pad (18);
the attachment portion (50) for attaching the elastic return spring (48) to the disc brake (12) including a rigid blade (200) which extends in a plane parallel to the axial displacement direction (A) of the brake pad (18), to be axially inserted in a complementary portion (28, 31) of the disc brake,
wherein the attachment portion (50) for attaching the elastic return spring (48) to the fixed support (14) includes a stabilising leg (212) of the elastic return spring (48) which cooperates with a portion of said slider (28),
**characterised in that** the attachment portion (50) for attaching the elastic return spring (48) to the disc brake (12) includes a stop (202) to cooperate with a face (204) facing the disc brake (12) to block the axial sliding of the elastic return spring (48) in the direction corresponding to the axial displacement of the brake pad (18) to its active braking position , and
**in that** said stabilising leg (212) transversally and horizontally extends from an axial orientation edge (208) of the elastic return spring (48).

12. The spring according to claim 11, **characterised in that** said stop (202) belongs to a stop leg (206) which extends from an axial orientation edge (208) of the elastic return spring (48).

13. The spring according to claim 11, **characterised in that** said connecting branch (B4) is an axial orientation rigid branch parallel to the sliding direction of the brake pad (18).

14. The spring according to claim 11, **characterised in that** it includes means for compensating for a wear play (J2) of a friction lining (24) of the brake pad (18), which are interposed between said attachment portion and said connecting branch (B4), and which are plastically deformed when a stroke of the brake pad (18), along an axial displacement direction to an active braking position, is higher than a determined operating play (J1).

15. The spring according to claim 11, **characterised in that** it is made as a single piece by cutting and forming a material sheet.

16. A replacement kit for a disc brake of an automotive vehicle according to any of claims 1 to 10, **characterised in that** it includes at least one brake pad (18) and two elastic return springs (48) paired with said brake pad (18) each of which is made according to any of claims 14 to 21.

17. The replacement kit according to claim 16, **characterised in that** it further includes two springs (100) for mounting the brake pad into the disc brake.
